# EUROPEAN PATENT APPLICATION

(11) **EP 2 567 943 A1**
(43) Date of publication of application: **13.03.2013**
(21) Application number: 12190649.9
(22) Date of filing: 29.11.2007
(51) Int. Cl.: C02F 1/52, C02F 1/50, C01G 23/00, C02F 103/04

(54) **TITANIUM COAGULANT FOR NATURAL AND WASTE WATER PURIFICATION AND DISINFECTION AND METHOD FOR UTILIZING THEREOF**

(30) Priority: 02.07.2007 RU 2007124531
(62) Divisional of application: 07861071.4
(71) Applicant: Sittec Closed Joint Stock Company (Sittec CJSC), Moscow 123100 (RU)
(72) Inventor: Muliak, Vladimir Vitlievich, 119034 Moscow (RU); Rodak, Vladimir Prokofievich, 169300, Republic Komy (RU); Isaev, Georgii Michailovich, 169347 Republic Komy (RU)
(74) Representative: Valea AB

(57) **Abstract**

A composition comprising: a titanium coagulant for natural and waste water purification and disinfection, which titanium coagulant comprises the ingredients being taken in a ratio of: water no more than 7.4 weight %, aluminium oxide no more than 76.5 weight %, titanium oxide no less than 10.6 weight %, silicon oxide no less than 5.0 weight %, and sulfur, ferrous, calcium, chlorine accounting for no more than 0.5 weight % and a mixture of aluminium sulfate and/or aluminium oxychloride and/or aluminium hydroxychloride, characterized in that the weight percentage ratio of titanium coagulant to the mixture is 50:50.

## Description

The invention relates to the field of ecology, particularly to the technology of natural water purification and disinfection during water conditioning and physical-and-chemical wastewater treatment from toxic compounds of natural and technogenic origin involving various coagulants, and it could be used for human state improvement and health maintenance and for environment protection, and it could be referred as well to the high-priority strategic development line "Nation health".

Known are coagulants, among which the most commonly encountered for natural and waste water are coagulants containing aluminium, particularly aluminium sulfate, aluminium oxychloride and sodium aluminate, wherein aluminium sulfate is the most often used [1]. However, the high level of purification and disinfection of natural and waste water cannot be achieved using these coagulants, since the main their disadvantage consists in significant amount of rest aluminium in purified water.

Known is the coagulant based on aluminium [2] being calcium hydrocarboaluminate in the form of gray-white homogenous powder. Calcium hydrocarboaluminate is produced as a coproduct in manufacturing alumina by means of hydrochemical synthesizing calcium from alkali-carboaluminate solutions and lime in complex processing of nephelines. However, high cost of nepheline being of rare occurrence in nature than, for instance, bauxites affects the high cost of the coagulant itself.

Known is granulated material composition [3] containing the catalyst based on Mn (II) and adsorbent based on ferrous, magnesium, manganese and silicon oxides. However, the known composition has insufficiently high capability for disinfecting and discoloring water being treated.

Known is the coagulant for purifying industrial sewage involving coagulants [4] containing natural aluminum silicate that has the silicon oxide to aluminium oxide ratio of 3.9 to 4.16 and the natural aluminum silicate to mineral acid ration of 0.07 to 0.25. However, the known coagulant has insufficiently high level of purification.

Known is the coagulant for purifying natural and waste water [5] being the closest one to the proposed invention by the achievable technical result and selected as the prior art. The coagulant comprises compounds of aluminium, calcium oxide, silicon oxide, ferrous oxide, magnesium oxide, and sulfur dioxide.

Disadvantages of the known coagulant consist in achieving insufficiently high level of purification and instability of decontamination properties thereof.

Known in the background are methods for producing the coagulant for natural and waste water purification. Known is the method for producing the coagulant of aluminium sulfate from aluminium hydroxide, which method being based on decomposing aluminium hydroxide with sulfuric acid and crystallizing the formed product [6, pp. 48-53]. However, this method requires expensive and scarce source material of aluminium hydroxide being the half-finished product in producing alumina.

Known are methods for producing coagulants from bauxites, kaolins, clays, and other materials containing aluminium, which method essence consists in decomposing these minerals with sulfuric acid and crystallizing subsequently the finished product [6, pp. 53-79]. However, these methods are complex and labor-intensive.

Known is the two-stage method for producing the coagulant based on aluminium hydroxylchloride [7] having sufficiently high purification properties. However, this method is labor-intensive and expensive, and is not already reliable as well in producing such a coagulant that has all-time high and stable purification and disinfection properties.

Known is the method for natural and waste water purification and disinfection, which method being the closest to the proposed method by the achieved technical result and selected as the prior art [5]. This method allows to achieve the technical result consisting in ecologically clean method for purifying and disinfecting potable water.

Disadvantages of the known method for producing the coagulant for natural and waste water purification consist in high cost and scarcity thereof, since, in order for producing such a coagulant, nepheline is used as the mineral, being of rare occurrence in nature than, for instance, bauxites, which affects the high cost of the obtained finished product, and the known method (as a whole) is as well labor-intensive and expensive.

Known in the background are also methods for utilizing the coagulant.

Known is the method for utilizing the coagulant for natural and waste water purification, which method being the closest to the proposed method and selected as the prior art [5], based on making water suspension and mixing thereof with the produced coagulant for a fixed period of time during which period the purification and disinfection occur.

Disadvantages of the known method consists in insufficiently high efficiency of water purification at low temperatures, a probability of water aggressivity, as well as a salt background of water being purified. All these factors, as a whole, results in reducing water network and conduit life cycle and in reducing their flow capacity.

The technical result achieved in the invention is common for the whole group of the claimed invention aspects (titanium coagulant for natural and waste water purification and disinfection, safe method for producing thereof, and method for utilizing thereof) and consists in: increasing the efficiency for purifying and disinfecting natural and waste water not less the level corresponding to the enforceable standard [8, 9], when water alkalinity and hydrogen index are not reduced as well as sulfate content in water is not increased; and, as a whole, reducing the cost of the whole technological cycle beginning from producing the new coagulant, as well as decreasing the labor intensity in purifying and disinfecting potable water.

The indicated technical result is achieved using a new titanium coagulant for natural and waste water purification and disinfection, which coagulant comprising compositions of oxides, hydroxides, sulfates, oxy hydrosulfates, and oxy hydrochlorides of titanium, silicon and aluminium, and which in accordance with the invention comprising further compositions of silicon, sulfur, ferrous, calcium, chlorine, and wherein the ingredients being taken in ratio:

| | |
|---|---|
| water | no more than 7.4 weight %, |
| aluminium oxide | no more than 76.5 weight %, |
| titanium oxide | no less than 10.6 weight %, |
| silicon oxide | no less than 5.0 weight %, |

and sulfur, ferrous, calcium, chlorine accounting for no more than 0.5 weight %.

The indicated technical result is achieved also with a safe method for producing the titanium coagulant for natural and waste water purification and disinfection, which method including steps of: providing a flotation concentrate from ore by any known enrichment method or combination thereof; torrefying subsequently the coagulant; and preparing a mixture therefrom, in which method in accordance with the invention: the step of torrefying is carried out until obtaining a roasted flotation concentrate with titanium dioxide no less than 50 % and silicon dioxide no less than 25 %; the mixture is prepared on the basis of the flotation concentrate, charred coal and lignosulfonates, which mixture being briquetted and chloridized at a temperature of no less than 600 °C and cleaned subsequently, after which the obtained mixture of liquid chlorides being subjected to synthesis; drying the obtained paste-like titanium coagulant at a temperature of no more than 135 °C, thus obtaining the powdered titanium coagulant, after which this titanium coagulant being obtained in pelletized and/or granulated form.

The indicated technical result is achieved by a new method for utilizing the titanium coagulant for natural and waste water purification and disinfection in accordance with the first embodiment, which method including a step of adding to water being purified the titanium coagulant in the form of water suspension, wherein, in accordance with the claimed invention, the obtained titanium coagulant is added to water being purified in the form of water suspension of 10 to 50 % solution in amount of no less than 5 mg/L on powdered titanium coagulant basis, and an intense mixing is performed no less than 1 minute.

Also, this technical result in accordance with the first embodiment of utilizing the titanium coagulant for natural and waste water purification and disinfection is achieved by that a mixture of powdered aluminium sulfate, and/or aluminium oxychloride, and/or aluminium hydroxychloride being mixed in advance with the titanium coagulant at a ratio of 50 % : 50 % is added in addition to water being purified.

In addition, this technical result in accordance with the first embodiment of utilizing the titanium coagulant for natural and waste water purification and disinfection is achieved by that a water solution of flocculants at a ratio of no more than 0.5 % in relation to the titanium coagulant is added in addition to water being purified.

Moreover, the indicated technical result in accordance with the first embodiment of utilizing the titanium coagulant for natural and waste water purification and disinfection is achieved by that superflac, or praestol, or polyacrylamide (PAA), or water-soluble cationic polymer (WSCP), or polyelectrolyte, or magnafloc (anionic flocculant); WSCP-polyelectrolyte; polydiallyldi-methylammonium chloride.

Furthermore, the indicated technical result in accordance with the first embodiment of utilizing the titanium coagulant for natural and waste water purification and disinfection is achieved by that mixtures of powdered aluminium sulfate, and/or aluminium oxychloride, and/or aluminium hydroxychloride being prepared in advance with the obtained titanium coagulant at a ratio of 50 % : 50 % is added in addition to water being purified.

Additionally, this technical result in accordance with the first embodiment of utilizing the titanium coagulant for natural and waste water purification and disinfection is achieved by that a water solution of flocculants at a ratio of no more than 0.5 % in relation to the mixture of titanium coagulant with powdered aluminium sulfate and/or aluminium oxychloride and/or aluminium hydroxychloride is added in addition to water being purified.

The indicated technical result is achieved by a new method for utilizing the titanium coagulant for natural and waste water purification and disinfection in accordance with the second embodiment, which method including a step of adding to water being purified the titanium coagulant in the form of water suspension, wherein, in accordance with the claimed invention, the obtained titanium coagulant is added to water being purified in the form of water suspension of 10 to 50 % solution in amount of no less than 5 mg/L on basis of mixture of powdered non-dechlorinated titanium dioxide used as an opacifier and disinfectant with the titanium coagulant in amount of no more 10 % in relation to the obtained titanium coagulant, and an intense mixing is performed no less than 1 minute. The water suspension is prepared usually by adding 70 mg of water to 30 mg of the titanium coagulant, and the prepared solution is well-stirred.

Also, this technical result in accordance with the second embodiment of utilizing the titanium coagulant for natural and waste water purification and disinfection is achieved by that a mixture of powdered aluminium sulfate, and/or aluminium oxychloride, and/or aluminium hydroxychloride being mixed in advance with the titanium coagulant and titanium dioxide at a ratio of 45 % : 55 % is added in addition to water being purified.

In addition, this technical result in accordance with the second embodiment of utilizing the titanium coagulant for natural and waste water purification and disinfection is achieved by that a water solution of flocculants at a ratio of no more than 0.5 % in relation to the mixture of the titanium coagulant and titanium dioxide is added in addition to water being purified.

Moreover, the indicated technical result in accordance with the second embodiment of utilizing the titanium coagulant for natural and waste water purification and disinfection is achieved by that superflac, or praestol, or polyacrylamide (PAA), or water-soluble cationic polymer, or polyelectrolyte, or magnafloc.

Furthermore, the indicated technical result in accordance with the second embodiment of utilizing the titanium coagulant for natural and waste water purification and disinfection is achieved by that mixtures of powdered aluminium sulfate, and/or aluminium oxychloride, and/or aluminium hydroxychloride being mixed in advance with a mixture of the obtained titanium coagulant with non-dechlorinated titanium dioxide at a ratio 45 % : 55 % in relation to the mixture of the titanium coagulant with the powdered aluminium sulfate, and/or aluminum oxychloride, and/or aluminium hydroxychloride is added in addition to water being purified.

The non-dechlorinated titanium dioxide is formed during production of the high-quality titanium dioxide, when the stage of surface treatment thereof is necessary, which stage including two steps of:
- dechlorinating the titanium dioxide, i.e., removing the sorbed chlorine from the origin titanium dioxide containing 0.1 % chlorine and more, up to permitted value of no more than 0.02 %;
- coating protection layers onto titanium dioxide surface.

Moreover, the indicated technical result is achieved by that in purifying and disinfecting natural and waste water the obtained titanium coagulant can be utilized in combination with the non-dechlorinated titanium dioxide not subjected to the stage of surface treatment and acting as the water opacifier.

Additionally, this technical result in accordance with the second embodiment of utilizing the titanium coagulant for natural and waste water purification and disinfection is achieved by that the claimed titanium coagulant can be used in combination with the known coagulants, flocculants and titanium dioxide.

It follows from the comparative analysis of the known technical solutions that the Applicant has not found out the identical group of the claimed invention integrated with the single above technical result.

### Embodiment Examples of the claimed Group of Invention

The claimed titanium coagulant was tested, in various objects of potable and source water by various Russian pilot industrial-research centers and special laboratories for water conditioning, as for the level of its correspondence with sanitary, hygienic, epidemiological, and other norms prescribed by State Standards, and the quality of purified water, which results and examples of specific tests are cited below.

The claimed titanium coagulant has been obtained by the Applicant at the own manufacturing base during the goal-directed pilot manufacturing investigations of searching the most effective, from the view point of purification degree and high disinfection level of natural (potable) and waste water, safe method for producing thereof and the most quick and cheap method for utilizing the means having stable purifying properties of high-quality and useful for human health purified water. The new coagulant consists of compounds which content on oxides basis is: titanium oxide - no less than 10.6 weight %, silicon oxide - no less than 5.0 weight %, and sulfur, ferrous, calcium, chlorine accounting for no more than 0.5 weight %.

### Example 1

The tests were carried out at the industrial and storm-water sewage of machine-building plant and at the underground source of utility and drinking water supply of the Karaozersk town of the Sverdlovsk's region. The results of treating underground source water of this utility and drinking water supply involving the claimed titanium coagulant containing compounds, which content on oxides basis is: titanium oxide - no less than 10.6 weight %, silicon oxide - no less than 5.0 weight %, and sulfur, ferrous, calcium, chlorine accounting for no more than 0.5 weight %, and aluminium oxychloride (AOC) "Bopak-E", showed more effective purification of the new titanium coagulant as compared with different coagulants, particularly in comparison with aluminium oxychloride in removing silicon compounds; the rest aluminium content when treating origin water with the titanium coagulant meet the norms and rules being in force, and when treating water with aluminium oxychloride the rest aluminium content is higher than the required indices, which meets the sanitary norms and rules being in force [10]. The obtained results of multiple industrial tests confirm the compound efficiency and optimal ingredient ratio of the claimed titanium coagulant, as well as the reduction of specific concentrations of silicon compound in test assays (treated water) when utilizing the claimed titanium coagulant at the average by 20 %. The silicon content of the origin water was 13.25 mg/L, aluminium was absent. The test results are shown in the Table 1.

**Table 1**

| Results of water treatment by the titanium coagulant and aluminium oxychloride | | | | | |
|---|---|---|---|---|---|
| No. of Assay | | 1 | 2 | 3 | 4 |
| Solution | % | Solution of powdered titanium coagulant | | 1 % solution of AOC "Bopak-E" | |
| Coagulant dose according to end product | | 20 | 30 | 20 | 30 |
| Quality of filtered water | Rest aluminium, mg/L | 0.089 | 0.080 | 0.49 | 1.54 |
| | Rest silicon, mg/L | 12.52 | 11.58 | 12.76 | 12.0 5 |

The claimed safe method for producing the new titanium coagulant designed for natural and waste water purification and disinfection has been developed during the goal-directed pilot manufacturing investigations of searching the most effective, reliable, disinfecting, epidemiologically safe, and decontaminating means for natural (potable) and waste water, as well as the most quick and cheap method for utilizing this means for the purpose of obtaining purified water having quality stable properties, useful for human health.

### Example 2

Known technologies for chlorinating a mixture based on flotation concentrate, charred coal and lignosulfonates suppose that maintaining the temperature of the reaction mixture *under* 600 °C, in order for excluding to the maximum the process for chlorinating silicon dioxide and other chemical elements, require to conduct an additional process for purifying titanium tetrachloride by the rectification technique.

Results of pilot manufacturing investigations made by the Applicant confirm the expediency for creating the required conditions for chlorinating the mixture based on flotation concentrate, charred coal and lignosulfonates at the temperature *above* 600 °C, when the process for chlorinating silicon occurs for the purpose of the fullest recovery of compounds based on silicon with excluding subsequently the rectification stage from the processing chain, which results, in essence, in a new technology, acceleration, cheapening and obtaining more stable and high-quality properties of water being purified.

The pilot manufacturing investigations for developing a safe method for producing the titanium coagulant were carried out by the Applicant under condition of maintaining the temperature in a pit furnace *above* 600 °C when chlorinating the mixture based on flotation concentrate, charred coal and lignosulfonates. Later on, after purifying the obtained liquid chlorides, the rectification stage which is so necessary for separating titanium tetrachloride from silicon tetrachloride was excluded from the technology, and the mixture of silicon and titanium chlorides was subjected to synthesis. The method for producing the claimed titanium coagulant is flameproof and blast-proof. By the severity of exposure upon living organisms and human being, the method for producing such a coagulant relates to the fourth class of hazard in accordance with the State Standard CC 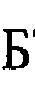 T 12.1.005-76 (safe). In the air and water, when producing the titanium coagulant, no toxic matters appear. In order for protecting collectively the working personal, the equipment and communications sealing, as well as the supply and exhaust ventilation in accordance with the State Standard CC 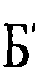 T 12.4.021-75 is designed, which provides compatibility of the working zone air with the requirements of the State Standard CC 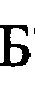 T 12.1.005-88. The working personal is provided with working wear and individual protective means in accordance with the standard sanitary norms. In loading and unloading the obtained titanium coagulant, an accident prevention should be kept in accordance with the State Standard CC 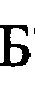 T 12.3.009-76. The maximal working concentration of the obtained titanium coagulant employed in the Applicant's water conditioning is 30 mg/L. The test results are shown in the Table 2.

**Table 2**

| Dependence of silicon tetrachloride yield on temperature of reaction mixture of pit furnace | | |
|---|---|---|
| No. | Temperature of reaction mixture in pit furnace, °C | Silicon tetrachloride yield, % |
| 1 | 500 | 0.5 |
| 2 | 600 | 0.8 |
| 3 | 700 | 0.86 |
| 4 | 800 | 1.8 |
| 5 | 900 | 5.2 |
| 6 | 1000 | 11.4 |
| 7 | 1100 | 18.6 |
| 8 | 1200 | 32 |
| 9 | 1300 | 46 |
| 10 | 1400 | 68 |
| 11 | 1500 | 72 |
| 12 | 1600 | 86 |

The claimed method for utilizing the new titanium coagulant for natural and waste water purification and disinfection (variants) has been developed at the Applicant's pilot manufacturing base and tested in many leading centers and research laboratories of the country for the capability of utilizing the new coagulant in optimal conditions and ratios to water being treated in order for obtaining purified water qualitatively stable in its useful properties for the human health.

### Example 3

The technology of utilizing the claimed titanium coagulant was evaluated and tested for the purpose of potable water purification and disinfection quality (object - Moskva-river). The tests were performed in March 2007 on the base of the Moscow State unitary enterprise "MOSVODOKANAL" (MGUP "MOSVODOKANAL") by the Center of water conditioning technology advancement at the industrial-scale plant "Mosvodopodgotovka". The results are shown in the Table 3.

**Table 3**

| Origin water quality (Moskva-river) | | | | | | | | | | | |
|---|---|---|---|---|---|---|---|---|---|---|---|
| Temperature | Muddiness | Water color index | pH | | Permanganate value | | Alkalinity | | Odor | | Ammonia |
| Deg. | mg/L | Deg. | | | mgO/L | | mg-eq/L | | Number | | mg/L |
| 6 | 6.8 | 47 | 7.79 | | 6.6 | | 2.9 | | 2 stale | | 0.12 |

| Experimental conditions | | | | | | | | | | | |
|---|---|---|---|---|---|---|---|---|---|---|---|
| 1 | 2 | 3 | | 4 | | 5 | | 6 | | 7 | |
| Powdered titanium coagulant | Coagulant inputting | Quick mixing Speed 180 rpm Time 3 min | | Slow mixing Speed 40 rpm Time 20 min | | Settling 30 min | | Sample taking | | Filtering through paper filter (white band) | |
| Sample results | | | | | | | | | | | |

| Sample No. | 1 | | | | | | | | | | |
|---|---|---|---|---|---|---|---|---|---|---|---|
| Solution | 10% solution of powdered titanium coagulant | | | | | | | | | | |
| Coagulant dose according to end product, mg/L | 60 | | | | | | | | | | |
| Volume of input suspension, mL/L | 0.6 | | | | | | | | | | |
| Coagulant dose according to Al₂O₃, mg/L | 8.13 | | | | | | | | | | |

| Filtered water quality: | | | | | | | | | | | |
|---|---|---|---|---|---|---|---|---|---|---|---|
| Water color index, deg. | 18 | | | | | | | | | | |
| pH | 7.62 | | | | | | | | | | |
| Muddiness, mg/L | 0.10 | | | | | | | | | | |
| Rest Al, mg/L | 0.11 | | | | | | | | | | |
| Permanganate value, mgO/L | 4.24 | | | | | | | | | | |

The test results have confirmed the working efficiency and technical result of the claimed titanium coagulant for natural water purification and disinfection, which coagulant has the optimal condition in a dosage of 60 mg/L and concentration of 10 % at the intense agitation during 3 minutes.

### Example 4

The technology of utilizing the claimed titanium coagulant was evaluated and tested for the purpose of potable water purification and disinfection quality (object - river Tom'). The tests were performed in May 2007 by the base laboratory of the branch of the municipal unitary enterprise "Tomskiy energokompleks" "TOMSKVODOKANAL". The results are shown in the Table 4.

**Table 4**

| Origin water quality (river Tom') | | | |
|---|---|---|---|
| Temperature | Muddiness | Water color index | Aluminium |
| Deg. | mg/L | Deg. | mg/L |
| 10.5 | 16.1 | 10.2 | <0.04 |

| Sample results | | | |
|---|---|---|---|
| Sample No. | | 1 | |
| Solution | | 20% solution of powdered titanium coagulant | |
| Coagulant dose according to end product, mg/L | | 15 | |
| Volume of input suspension, mL/L | | 0.075 | |
| Volume of flocculant PAA (0.1 %), mg/L | | - | |
| Rest chlorine content in origin water, mg/L | 2.46 | | |
| Filtered water quality: | | | |
| Rest Al, mg/L | 0.06 | | |
| Muddiness, mg/L | 0.10 | | |
| Rest Ti, mg/L | 0.018 | | |

The test results for potable water from the tested object (river Tom') have confirmed the working efficiency and technical result of the claimed titanium coagulant for natural water purification and disinfection, which coagulant has the optimal condition in a dosage of 15 mg/L and concentration of 20 % at the intense agitation during 2 minutes.

### Example 5

The technology of utilizing the claimed titanium coagulant was evaluated and tested for the purpose of potable water purification and disinfection quality (object - Verkh-Isetskiy pond). The tests were performed in April 2007 on the base of the Central laboratory of the municipal unitary enterprise "VODOKANAL" (MUP "VODOKANAL"), Ekaterinbourg. The results are shown in the Table 5.

**Table 5**

| Origin water quality (Verkh-Isetskiy pond) | | | |
|---|---|---|---|
| Temperature | | Deg. | 3 |
| Muddiness | | mg/L | 3.19 |
| Water color index | | Deg. | 39.73 |
| pH | | | 7.25 |
| Permanganate value | | mgO/L | 11.52 |
| Alkalinity | | mg-eq/L | 0.86 |
| Rest aluminium | | mg/L | 0.135 |
| Ferrous | | mg/L | 0.47 |
| Manganese | | mg/L | 0.278 |

| Test conditions | | | |
|---|---|---|---|
| 1 | Powdered titanium coagulant | | |
| 2 | Coagulant inputting | | |
| 3 | Quick mixing | | |
| | Speed 150 rpm | | |
| | Time 90 sec | | |
| 4 | Slow mixing | | |
| | Speed 30 rpm | | |
| | Time 10 min | | |
| 5 | Settling 20 min | | |
| 6 | Filtering through quartz sand | | |
| 7 | Sample taking | | |

| Sample results | | | |
|---|---|---|---|
| Sample No. | | 1 | 2 |
| Solution | | 30 % solution of powdered titanium coagulant | |
| Coagulant dose according to end product, mg/L | | 40 | 60 |
| Volume of input suspension, mL/L | | 0.13 | 0.2 |
| Coagulant dose according to Al₂O₃, mg/L | | 5.42 | 8.13 |

| Filtered water quality: | | | |
|---|---|---|---|
| Water color index, deg. | | 9.59 | 6.85 |
| pH | | 6.9 | 6.85 |
| Alkalinity, mg-eq/L | | 0.72 | 0.60 |
| Muddiness, mg/L | | 0.58 | <0.58 |
| Ferrum, mg/L | | 0.0122 | 0.051 |
| Rest Al, mg/L | | 0.163 | 0.098 |
| Manganese, mg/L | | 0.220 | 0.193 |
| Permanganate value, mgO/L | | 4.80 | 4.00 |

The test results in utilizing the claimed titanium coagulant for natural water purification and disinfection for needs of potable water from the tested object (Verkh-Isetskiy pond) have confirmed its working efficiency and technical result under conditions: a dosage of 40 mg/L and concentration of 30 % at the intense agitation during 90 seconds (1.5 minutes).

### Example 6

The technology of utilizing the claimed titanium coagulant was evaluated and tested for the purpose of potable water purification and disinfection quality (object - Moskva-river). The tests were performed in June 2007 on the base of the Moscow State unitary enterprise "MOSVODOKANAL" (MGUP "MOSVODOKANAL") by the Center of water conditioning technology advancement at the industrial-scale plant "Mosvodopodgotovka". The results are shown in the Table 6.

**Table 6**

| Origin water quality (Moskva-river) | | | | | | | | | | | | |
|---|---|---|---|---|---|---|---|---|---|---|---|---|
| Temperature | Muddiness | Water color index | pH | Permanganate value | Alkalinity | Odor | Chlorides | Am monia | | | | |
| Deg. | mg/L | Deg. | | mgO/L | mg-eq/L | Number | mg/L | mg/ | | | | |
| | | | | | | | | | | | | L |
| 19 | 4.4 | 21 | 7.99 | 5.3 | | 3.35 | | 1-2 stale | | 11.3 | | 0.09 |

| Experimental conditions | | | | | | | | | | | | |
|---|---|---|---|---|---|---|---|---|---|---|---|---|
| 1 | 2 | 3 | | | 4 | | 5 | | 6 | | 7 | |
| Powdered titanium coagulant | Coagulant inputting | Quick mixing | | | Slow mixing | | Settling 30 min | | Sample taking | | Filtering through paper filter (white band) | |
| | | Speed 180 rpm | | | Speed 40 rpm | | | | | | | |
| | | Time 3 min | | | Time 20 min | | | | | | | |
| Sample results | | | | | | | | | | | | |

| Sample No. | | | | | | 1 | | 2 | | | 3 | |
|---|---|---|---|---|---|---|---|---|---|---|---|---|
| | | | | | | Powdered titanium coagulant, line No. 3 | | | | | | |
| Coagulant dose according to end product, mg/L | | | | | | 30 | | 45 | | | 60 | |
| Volume of input suspension, mL/L | | | | | | 0.1 | | 0.15 | | | 0.2 | |

| Filtered water quality: | | | | | | | | | | | | |
|---|---|---|---|---|---|---|---|---|---|---|---|---|
| Muddiness, mg/L | | | | | | 0.823 | | 0.682 | | | 0.529 | |
| Water color index, deg. | | | | | | 19 | | 15 | | | 15 | |
| Rest Al, mg/L | | | | | | 0.229 | | 0.197 | | | 0.167 | |

The test results of potable water from the tested object (Moskva-river) have confirmed the working efficiency and technical result of the method for utilizing the claimed titanium coagulant for natural water purification and disinfection for needs of potable water, which coagulant has the optimal ratio 50 % : 50 % in mixture with powdered aluminium sulfate, the optimal condition in a dosage of 30 mg/L and concentration of 30 %.

### Example 7

The technology of utilizing the claimed titanium coagulant was evaluated and tested for the purpose of potable water purification and disinfection quality (object - underground intake). The tests were performed in May-June 2007 by the base laboratory of the branch of the municipal unitary enterprise "Tomskiy energokompleks" "TOMSKVODOKANAL". The results are shown in the Table 7.

**Table 7**

| Origin water quality (Tom' river) | | | | | |
|---|---|---|---|---|---|
| Temperature | Muddiness | Water color index | Aluminium | | |
| Deg. | mg/L | Deg. | mg/L | | |
| 10.5 | 16.1 | 10.2 | | <0.04 | |

| Sample results | | | | | |
|---|---|---|---|---|---|
| Sample No. | | 1 | 2 | | 3. |
| Solution | | 20% solution of powdered titanium coagulant | | | |
| Coagulant dose according to end product, mg/L | | 15 | 15 | | 20 |
| Volume of input suspension, mL/L | | 0.075 | 0.075 | | 0.1 |
| Volume of flocculant PAA (0.1 %), mg/L | | 0.6 | 0.3 | | 0.3 |
| Rest chlorine content in origin water, mg/L | | 2.46 | 2.46 | | 2.46 |

| Filtered water quality: | | | | | |
|---|---|---|---|---|---|
| Rest Al, mg/L | | | | | |
| Muddiness, mg/L | | | | | |
| Rest Ti, mg/L | | | | | |

The test results for potable water from the tested object (underground intake) have confirmed the working efficiency and technical result of the claimed method for utilizing the obtained titanium coagulant for natural water purification and disinfection, which coagulant has a ratio of the flocculant (by the example of polyacrylamide, PAA) in relation to the titanium coagulant of 0.1 %, a dosage of 15 mg/L and concentration of 20 %.

### Example 8

The technology of utilizing the claimed titanium coagulant was evaluated and tested for the purpose of potable water purification and disinfection quality (object - Volchikhinskoye impoundment), which results have shown the working efficiency in utilizing the claimed coagulant. The tests were performed in June 2007 on the base of the Central laboratory of the municipal unitary enterprise "VODOKANAL" (MUP "VODOKANAL"), Ekaterinbourg. The results are shown in the Table 8.

**Table 8**

| Origin water quality (Volchikhinskoye impoundment) | | | |
|---|---|---|---|
| Muddiness | | mg/L | 5.80 |
| Water color index | | Deg. | 36.99 |
| pH | | | 7.25 |
| Rest aluminium | | mg/L | 0.121 |

| Test conditions | | | |
|---|---|---|---|
| 1 | Powdered titanium coagulant | | |
| 2 | Coagulant inputting | | |
| 3 | Quick mixing | | |
| | Speed 130 rpm | | |
| | Time 90 sec | | |
| 4 | Flocculant inputting | | |
| 5 | Quick mixing | | |
| | Speed 130 rpm | | |
| | Time 30 sec | | |
| 6 | Slow mixing | | |
| | Speed 30 rpm | | |
| | Time 10 min | | |
| 7 | Settling 10 min | | |
| 8 | Filtering through quartz sand | | |
| 9 | Sample taking | | |

| Sample results | | | |
|---|---|---|---|
| Sample No. | | 1 | 2 |
| Solution | | 30 % solution of titanium coagulant, line No.1 | |
| Coagulant dose according to end product, mg/L | | 30 | 40 |
| Volume of input suspension, mL/L | | 0.1 | 0.13 |
| Flocculant Praestol 650 TR, mg/L, (0,15 % solution) | | 0.15 | 0.15 |

| Filtered water quality: | | | |
|---|---|---|---|
| Water color index, deg. | | 16.44 | 13.70 |
| Rest Al, mg/L | | 0.407 | 0.246 |

The test results of potable water from the tested object (Volchikhinskoye impoundment) have confirmed its working efficiency and technical result in utilizing the obtained titanium coagulant for natural water purification and disinfection, which coagulant has a ratio of the flocculant (by the example of Praestol 650 TR) in relation to the titanium coagulant of 0.1 %, a dosage of 15 mg/L and concentration of 30 %.

### Example 9

The technology of utilizing the claimed titanium coagulant was evaluated and tested for the purpose of potable water purification and disinfection quality (object - Volchikhinskoye impoundment), which results have shown the working efficiency in utilizing the claimed coagulant. The tests were performed in June 2007 on the base of the Central laboratory of the municipal unitary enterprise "VODOKANAL" (MUP "VODOKANAL"), Ekaterinbourg. The results are shown in the Table 9.

**Table 9**

| Origin water quality (Volchikhinskoye impoundment) | | | | |
|---|---|---|---|---|
| Muddiness | | mg/L | | 5.80 |
| Water color index | | Deg. | | 36.99 |
| pH | | | | 7.25 |
| Rest aluminium | | mg/L | | 0.121 |

| Test conditions | | | | |
|---|---|---|---|---|
| 1 | Powdered titanium coagulant | | | |
| 2 | Coagulant inputting | | | |
| 3 | Quick mixing | | | |
| | Speed 130 rpm | | | |
| | Time 90 sec | | | |
| 4 | Flocculant inputting | | | |
| 5 | Quick mixing | | | |
| | Speed 130 rpm | | | |
| | Time 30 sec | | | |
| 6 | Slow mixing | | | |
| | Speed 30 rpm | | | |
| | Time 10 min | | | |
| 7 | Settling 10 min | | | |
| 8 | Filtering through quartz sand | | | |
| 9 | Sample taking | | | |

| Sample results | | | | |
|---|---|---|---|---|
| Sample No. | | | 1 | |
| Solution | | | 30 % solution of titanium coagulant, line No. 2 | |
| Coagulant dose according to end product, mg/L | | | 40 | |
| Volume of input suspension, mL/L | | | 0.13 | |
| Flocculant Praestol 650 TR, mg/L, (0,15 % solution) | | | 0.15 | |
| Filtered water quality: | | | | |
| Water color index, deg. | | | 13.70 | |
| Rest Al, mg/L | | | 0.244 | |

The test results of potable water from the tested object (Volchikhinskoye impoundment) have confirmed its working efficiency and technical result in utilizing the obtained titanium coagulant for natural water purification and disinfection, which coagulant has a ratio of the flocculant (by the example of Praestol 650 TR) in relation to the titanium coagulant of 0.1 %, a dosage of 15 mg/L and concentration of 40 %.

### Example 10

The technology of utilizing the claimed titanium coagulant was evaluated and tested for the purpose of potable water purification and disinfection quality (object - Moskva-river). The tests were performed in May-June 2007 on the base of the Moscow State unitary enterprise "MOSVODOKANAL" (MGUP "MOSVODOKANAL") by the Center of water conditioning technology advancement at the industrial-scale plant "Mosvodopodgotovka". The results are shown in the Table 10.

**Table 10**

| Origin water quality (Moskva-river) | | | | | | | | | | | | |
|---|---|---|---|---|---|---|---|---|---|---|---|---|
| Temperature | Muddiness | Water color index | pH | Permanganate value | | Alkalinity | | Odor | | Chlorides | | Am monia |
| Deg. | mg/L, | Deg. | | mgO/L | | mg-eq/L | | Number | | mg/L | | mg/ L |
| 19 | 4.4 | 21 | 7.99 | 5.3 | | 3.35 | | 1-2 stale | | 11.3 | | 0.09 |

| Experimental conditions | | | | | | | | | | | | |
|---|---|---|---|---|---|---|---|---|---|---|---|---|
| 1 | 2 | 3 | | | 4 | | 5 | | 6 | | 7 | |
| Powdered titanium coagulant (line 2) | Coagulant inputting | Quick mixing | | | Slow mixing | | Settling 30 min | | Sample taking | | Filtering through paper filter (white band) | |
| | | Speed 180 rpm | | | Speed 40 rpm | | | | | | | |
| | | Time 3 min | | | Time 20 min | | | | | | | |

| Sample results | | | | | | | | | | | | |
|---|---|---|---|---|---|---|---|---|---|---|---|---|
| Sample No. | | | | | 1 | 2 | | | | 3 4 5 6 | | |
| | | | | | Powdered titanium coagulant, line No. 2 | | | | | | | |
| Coagulant dose according to end product, mg/L | | | | | 70 | 70 | 70 | | 70 | 70 | | 70 |
| Volume of input 30 % suspension, mL/L | | | | | 0.23 | 0.23 | 0.23 | | 0.23 | 0.23 | | 0.23 |

| Settled water quality: | | | | | | | | | | | | |
|---|---|---|---|---|---|---|---|---|---|---|---|---|
| Muddiness, mg/L | | | | | 0.610 | 1.230 | 0.556 | | 0.26 2 | 0.34 7 | | 0.10 5 |
| pH | | | | | 7.830 | 7.845 | 7.837 | | 7.80 2 | 7.76 5 | | 7.67 3 |
| Rest Al, mg/L | 0.240 | 0.332 | 0.240 | 0.22 4 | 0.23 8 | | | | 0.19 5 | | | |

| Filtered water quality: | | | | | | | | | | | | |
|---|---|---|---|---|---|---|---|---|---|---|---|---|
| Muddiness, mg/L | 0.190 | 0.117 | 0.105 | 0.09 4 | 0.02 2 | | | | 0.02 7 | | | |
| Water color index, deg. | 10 | 11 | 9 | 9 | 7 | | | | 5 | | | |
| Permanganate value, mgO/L | 4.56 | 4.23 | 4.24 | 4.32 | 4.4 | | | | 3.68 | | | |
| Rest Al, mg/L | 0.142 | 0.151 | 0.141 | 0.14 4 | 0.13 7 | | | | 0.13 2 | | | |

The test results of potable water from the tested object (Moskva-river) have confirmed the working efficiency and technical result of the method for producing the claimed titanium coagulant for natural water purification and disinfection, which coagulant has the optimal ratio of titanium dioxide in amount of 5 % in relation to powdered titanium coagulant; the optimal concentration of 30 % of the input water suspension, as well as a dosage of 30 mg/L.

### Example 11

The technology of utilizing the claimed titanium coagulant was evaluated and tested for the purpose of potable water purification and disinfection quality (object - river Vychegda). The tests were performed in May 2007 by the research water quality laboratory of the municipal unitary enterprise "Syktyvkarskiy Vodokanal". The results are shown in the Table 11.

**Table 11**

| Origin water quality (river Vychegda) | | | | | | | |
|---|---|---|---|---|---|---|---|
| Temper ature | Muddiness | Water color index | pH | Permanganate value | Alkalinity | Rest Al | Ferrum, total |
| Deg. | mg/L | Deg. | | mgO/L | mg-eq/L | mg/L | mg/L |
| 11.8 | 5.50 | 102 | 6.93 | 23.9 | 0.23 | | 1 |

| Sample results | | | | | | | |
|---|---|---|---|---|---|---|---|
| Sample No. | | | | 1 | | 2 | |
| Solution | | | | 30 % solution of powdered titanium coagulant, line No. 4 | | | |
| Coagulant dose according to end product, mg/L | | | | 80 | | 100 | |
| Coagulant dose according to Al₂O₃, mg/L | | | | 10.84 | | 13.55 | |
| Volume of input 30 % suspension, mL/L | | | | 0.27 | | 0.33 | |
| Rest chlorine content in water, mg/L | 0.92 | 0.92 | | | | | |

| Filtered water quality: | | | | | | | |
|---|---|---|---|---|---|---|---|
| Water color index, deg. | 12 | 10 | | | | | |
| Rest Al, mg/L | 0.15 | 0.1 | | | | | |
| pH | 6.16 | 6.11 | | | | | |

The test results of potable water from the tested object (river Vychegda) have confirmed the working efficiency and technical result of the claimed titanium coagulant for natural water purification and disinfection, which coagulant achieves the technical result at a ratio of mixture of titanium dioxide in amount of 5 %, aluminium sulfate in amount of 45 %, and titanium coagulant in amount of 50 % and concentration of 30 % of the input water suspension.

### Example 12

The technology of utilizing the claimed titanium coagulant was evaluated and tested for the purpose of potable water purification and disinfection quality (object - Volchikhinskoye impoundment), which results have shown the working efficiency in utilizing the claimed coagulant. The tests were performed in June 2007 on the base of the Central laboratory of the municipal unitary enterprise "VODOKANAL" (MUP "VODOKANAL"), Ekaterinbourg. The results are shown in the Table 12.

**Table 12**

| Origin water quality (Volchikhinskoye impoundment) | | | |
|---|---|---|---|
| Muddiness | | mg/L | 5.80 |
| Water color index | | Deg. | 36.99 |
| pH | | | 7.25 |
| Rest aluminium | | mg/L | 0.121 |

| Test conditions | | | |
|---|---|---|---|
| 1 | Powdered titanium coagulant (sample from the line No. 3) | | |
| 2 | Coagulant inputting | | |
| 3 | Quick mixing | | |
| | Speed 130 rpm | | |
| | Time 90 sec | | |
| 4 | Flocculant inputting | | |
| 5 | Quick mixing | | |
| | Speed 130 rpm | | |
| | Time 90 sec | | |
| 6 | Quick mixing | | |
| | Speed 130 rpm | | |
| | Time 10 min | | |
| 7 | Settling 10 min | | |
| 8 | Filtering through quartz sand | | |
| 9 | Sample taking | | |

| Sample results | | | |
|---|---|---|---|
| Sample No. | | 1 | |
| Solution | | 30 % solution of titanium coagulant, line No. 3 | |
| Coagulant dose according to end product, mg/L | | 40 | |
| Volume of input suspension, mL/L | | 0.13 | |
| Flocculant Praestol 650 TR, mg/L, (0,15 % solution) | | 0.15 | |
| Filtered water quality: | | | |
| Water color index, deg. | | 13.70 | |
| Rest Al, mg/L | | 0.244 | |

The test results of potable water from the tested object (Volchikhinskoye impoundment) have confirmed its working efficiency and technical result in utilizing the claimed titanium coagulant for natural water purification and disinfection for the potable quality, which coagulant has the optimal concentration of 30 % of the input water suspension at a dosage of 40 mg/L and with adding the flocculant Praestol 650 TR in the concentration of 0.15 %.

### Example 13

The technology of utilizing the claimed titanium coagulant was evaluated and tested for the purpose of potable water purification and disinfection quality (object - Volchikhinskoye impoundment), which results have shown the working efficiency in utilizing the claimed coagulant. The tests were performed in June 2007 on the base of the Central laboratory of the municipal unitary enterprise "VODOKANAL" (MUP "VODOKANAL"), Ekaterinbourg. The results are shown in the Table 13.

**Table 13**

| Origin water quality (Volchikhinskoye impoundment) | | |
|---|---|---|
| Muddiness | mg/L | 5.80 |
| Water color index | Deg. | 36.99 |
| pH | | 7.25 |
| Rest aluminium | mg/L | 0.121 |

| Test conditions | | |
|---|---|---|
| 1 | Powdered titanium coagulant | |
| 2 | Coagulant inputting | |
| 3 | Quick mixing | |
| | Speed 130 rpm | |
| | Time 90 sec | |
| 4 | Flocculant inputting | |
| 5 | Quick mixing | |
| | Speed 130 rpm | |
| | Time 30 sec | |
| 6 | Slow mixing | |
| | Speed 30 rpm | |
| | Time 10 min | |
| 7 | Settling 10 min | |
| 8 | Filtering through quartz sand | |
| 9 | Sample taking | |

| Sample results | | |
|---|---|---|
| Sample No. | | 1 |
| Solution | | 30 % solution of titanium coagulant, line No. 4 |
| Coagulant dose according to end product, mg/L | | 40 |
| Volume of input suspension, mL/L | | 0.13 |
| Flocculant Praestol 650 TR, mg/L, (0,15 % solution) | | 0.15 |

| Filtered water quality: | | |
|---|---|---|
| Water color index, deg. | | 12.33 |
| Rest Al, mg/L | | 0.489 |

The test results of potable water from the tested object (Volchikhinskoye impoundment) have confirmed its working efficiency and technical result in utilizing the claimed titanium coagulant for natural water purification and disinfection for the potable quality, which coagulant has the optimal ratio of titanium dioxide in amount 5 %, aluminium sulfate in amount of 45 %, and titanium coagulant in amount of 50 % and the optimal concentration of 30 % of the input water suspension at a dosage of 40 mg/L and with adding the flocculant Praestol 650 TR in the concentration of 0.15 %.

### Example 14

The technology of utilizing the claimed titanium coagulant was evaluated and tested for the purpose of potable water purification and disinfection quality (object - river Volga). The tests were performed in March 2007 on the base of the Moscow State unitary enterprise "MOSVODOKANAL" (MGUP "MOSVODOKANAL") by the Center of water conditioning technology advancement at the industrial-scale plant "Mosvodopodgotovka". The results are shown in the Table 14.

**Table 14**

| Origin water quality (Moskva-river) | | | | | | | | | | | | |
|---|---|---|---|---|---|---|---|---|---|---|---|---|
| Temperature | Muddiness | Water color index | pH | Permanganate value | | Alkalinity | Odor | | Chlorides | | Ammonia | |
| Deg. | mg/L | Deg. | | mgO/L | | mg-eq/L | Number | | mg/L | | mg/L | |
| | 1.735 | 96 | 8/0 | 11.25 | | 2.5 | 1-2 stale | | | | 0.02 | |

| Experimental conditions | | | | | | | | | | | | |
|---|---|---|---|---|---|---|---|---|---|---|---|---|
| 1 | 2 | 3 | | | 4 | | 5 | 6 | | 7 | | |
| Powdered titanium coagulant (sample 6) | Coagu lant inputting | Quick mixing | | | Slow mixing | | Settling 30 min | Sample taking | | Filtering through paper filter (white band) | | |
| | | Speed 180 rpm | | | Speed 40 rpm | | | | | | | |
| | | Time 3 min | | | Time 20 min | | | | | | | |

| Sample results | | | | | | | | | | | | |
|---|---|---|---|---|---|---|---|---|---|---|---|---|
| Sample No. | | | | | 1 | 2 | 3 | 4 | | 5 | | 6 |
| Coagulant dose according to end product, mg/L | | | | | 40 | 50 | 60 | 70 | | 80 | | 90 |
| Volume of input suspension, mL/L | | | | | 0.2 | 0.25 | 0.3 | 0.35 | | 0.4 | | 0.45 |
| Flocculi size, visually | | 10 minutes | | | <2 | <2 | 2 | 2 | | 2 | | 2 |
| | | 20 minutes | | | 2 | 2 | 2 | 2 | | 2 | | 2 |

| Settled water quality: | | | | | | | | | | | | |
|---|---|---|---|---|---|---|---|---|---|---|---|---|
| Muddiness, mg/L | | | | | 2.368 | 2.026 | 1.379 | 0.848 | | 1.124 | | 1.242 |
| pH | | | | | 7.56 | 7.52 | 7.49 | 7.41 | | 7.39 | | 7.32 |
| Rest Al, mg/L | | | | | 0.372 | 0.366 | 0.310 | 0.246 | | 0.264 | | 0.273 |

| | | | | | | Filtered water quality: | | | | | | |
|---|---|---|---|---|---|---|---|---|---|---|---|---|
| Muddiness, mg/L | | | | | | | 0.768 | 0.561 | 0.349 | 0.283 | 0.164 | 0.093 |
| Water color index, deg. | | | | | | | 52 | 44 | 38 | 31 | 26 | 1.9 |
| Permanganate value, mgO/L | | | | | | | 7.36 | 7.20 | 6.96 | 5.92 | 5.60 | 5.04 |
| Rest Al, mg/L | | | | | | | 0.183 | 0.172 | 0.149 | 0.123 | 0.114 | 0.100 |

The test results of potable water from the tested object (river Volga) according to the working efficiency of the claimed titanium coagulant for natural water purification and disinfection have confirmed the technical result achievement at concentration of the input water suspension in the range of 10 to 50 %.

### Example 15

The technology of utilizing the claimed titanium coagulant was evaluated and tested for the purpose of potable water purification and disinfection quality (object - Verkh-Isetskiy pond). The tests were performed in April 2007 on the base of the Central laboratory of the municipal unitary enterprise "VODOKANAL" (MUP "VODOKANAL"), Ekaterinbourg. The results are shown in the Table 15.

**Table 15**

| Origin water quality (Verkh-Isetskiy pond) | | | | |
|---|---|---|---|---|
| Temperature | | Deg. | 3 | |
| Muddiness | | mg/L | 3.19 | |
| Water color index | | Deg. | 39.73 | |
| pH | | | 7.25 | |
| Permanganate value | | mgO/L | 11.52 | |
| Alkalinity | | mg-eq/L | 0.86 | |
| Rest aluminium | | mg/L | 0.135 | |
| Ferrous | | mg/L | 0.47 | |
| Manganese | | mg/L | 0.278 | |

| Test conditions | | | | |
|---|---|---|---|---|
| 1 | Aluminium oxychloride "Bopak-E", Powdered titanium coagulant | | | |
| 2 | Coagulant inputting | | | |
| 3 | Quick mixing | | | |
| | Speed 150 rpm | | | |
| | Time 90 sec | | | |
| 4 | Slow mixing | | | |
| | Speed 30 rpm | | | |
| | Time 10 min | | | |
| 5 | Settling 20 min | | | |
| 6 | Filtering through quartz sand | | | |
| 7 | Sample taking | | | |

| Sample results | | | | |
|---|---|---|---|---|
| Sample No. | | 4 | 5 | 6 |
| Solution | | 30 % solution of powdered titanium coagulant | | |
| Coagulant dose according to end product, mg/L | | 20 | 40 | 60 |
| Volume of input suspension, mL/L | | 0.07 | 0.13 | 0.2 |
| Coagulant dose according to Al₂O₃, mg/L | | 2.71 | 5.42 | 8.13 |
| Flocculation | | Small flocks in bulk, sedimentation | Large flocks, sedimentation | Large flocks, sedimentation |

| Filtered water quality: | | | | |
|---|---|---|---|---|
| Water color index, deg. 24.66 | | | 10.27 | 6.85 |
| Rest Al, mg/L 0.52 | | | 0.19 | 0.079 |

The test results in utilizing the claimed titanium coagulant for natural water purification and disinfection for needs of potable water from the tested object (Verkh-Isetskiy pond) have confirmed its working efficiency and technical result under conditions: a dosage of 40 mg/L and concentration of 30 % at the intense agitation during 90 seconds (1.5 minutes).

### Example 16

The technology of utilizing the claimed titanium coagulant was evaluated and tested for the purpose of disinfecting the purified potable water from pathogenic bacteria (object - river Ob'). The tests were performed in May 2007 on the base of the Central bacteriology laboratory of the municipal unitary enterprise "GORVODOKANAL" (MUP "GORVODOKANAL"), Novosibirsk. The results are shown in the Table 16.

**Table 16**

| Origin water quality (river Ob') | | | | | | | |
|---|---|---|---|---|---|---|---|
| Temperature | Deg. | | | 12.6 | | | |
| Muddiness | mg/L | | | 15.3 | | | |
| Water color index | Deg. | | | 25 | | | |
| pH | | | | 7.25 | | | |
| OMCH | CFU/mL | | | 88 | | | |
| Common caulimorphous bacteria | CFU/mL in 100 mL | | | 9 | | | |
| Thermotolerant caulimorphous bacteria | CFU/mL in 100 mL | | | not found out | | | |

| Sample results | | | | | | | |
|---|---|---|---|---|---|---|---|
| Sample No. | | 1 | 2 | 3 | 4 | 5 | 6 |
| Solution | | 20 % solution of powdered titanium coagulant | | | | | |
| Coagulant dose according to end product, mg/L | | 20 | 30 | 40 | 20 | 30 | 40 |
| Coagulant dose according to Al₂O₃, mg/L | | 2.71 | 4.07 | 5.42 | 2.71 | 4.07 | 5.4 2 |
| Volume of input suspension, mL/L | | 0.1 | 0.15 | 0.2 | 0.1 | 0.15 | 0.2 |
| Flocculant BΠK-402 dosage (0.05 %) mg/L | | 0.03 | 0.03 | 0.03 | - | - | - |

| Filtered water quality: | | | | | | | |
|---|---|---|---|---|---|---|---|
| Water color index, deg. | | - | - | - | 10 | - | - |
| Muddiness, mg/L | | 0.45 | 0.45 | - | - | 0.09 | - |

As a result of testing the obtained coagulant and utilizing thereof, pathogenic bacteria were not found out.

### Example 17

The technology of utilizing the claimed titanium coagulant and quality of potable water purified with the titanium coagulant were examined in the Federal State science organ "St. Petersburg Science-Research Institute of Epidemiology and Microbiology named after PASTEUR" of the Federal supervision service in the sphere of consumer protection and human welfare (hereinafter: SP SRI EM na PASTEUR). The tests were performed in 2007 in St. Petersburg (object - river Neva). The results of performed tests were carried out for various forms of the titanium coagulant (powder and tablets) are shown in the Table 17.

**Table 17**

| Test results of influencing the titanium coagulant (powder) and titanium coagulant (tablets) on the disinfection level of river water (Neva) | | | | | |
|---|---|---|---|---|---|
| Dosage of reagents, mg/L | | Exposure time | | | |
| | | 1 hour | | 3 hours | |
| TC powder | TC tablet | Coli index, CFU/L | Microbe number, CFU/mL | Coli index, CFU/L | Microbe number, CFU/mL |
| 0 | 1 | >1100 | 536 | >1100 | 500 |
| 1.0 | 1 | 12 | 166 | 12 | 8 |
| 5.0 | 1 | <3 | 2 | <3 | 0 |
| 10.0 | 1 | <3 | 0 | <3 | 0 |
| 0 | 2 | >1100 | 129 | >1100 | 123 |
| 1.0 | 2 | 27 | 134 | <3 | 5 |
| 5.0 | 2 | <3 | 24 | <3 | 0 |
| 0 | 3 | >1100 | 49 | >1100 | 56 |
| 1.0 | 3 | 3 | 7 | <3 | 3 |
| 5.0 | 3 | <3 | 4 | <3 | 2 |
| 10.0 | 3 | 360 | 18 | >1100 | 0 |
| 30.0 | 3 | <3 | 2 | <3 | 0 |

### Example 18

In accordance with the test results, it follows that an amount of the optimal titanium coagulant dosage in the water treatment technologies depends to a great extent on the natural water contamination level. Results of many tests have shown that the titanium coagulant can provide an effective disinfection in parallel with a high degree of water purification during sufficiently long period of time. The duration of the disinfection "aftereffect" of the titanium coagulant is defined by both the input dosage amount of the biocide reagent and the its rest content in the disinfected water. The obtained test results confirm that water remains epidemiological safety until the titanium coagulant salts contain therein. Ingredients of the new titanium coagulant and their ratio are chemically resistant compounds in a wide range and ensure a durable disinfection action (see Tables 18 and 19).

**Table 18**

| Biocide effect of the titanium coagulant (powder) on microorganisms | | |
|---|---|---|
| Test microorganisms | Titanium coagulant concentration | Death time of test microorganism, min. |
| S.aureus | 1.0 | 30 |
| | 5.0 | 20 |
| | 10.0 | 10 |
| E.coli | 1.0 | >30 |
| | 5.0 | >30 |
| | 10.0 | 15 |
| P.aeruginosa | 1.0 | >30 |
| | 10.0 | 15 |
| C.albicans | 1.0 | >30 |
| | 5.0 | 20 |
| | 10.0 | 10 |
| T.gypseum | 1.0 | 30 |
| | 2.0 | 15 |
| Test-virus | 1.0 | 60 |
| | 5.0 | 30 |
| B.cereus | 5.0 | 60 |

**Table 19**

| Biocide effect of the titanium coagulant (tablet) on microorganisms | | |
|---|---|---|
| Test microorganisms | Titanium coagulant concentration | Death time of test microorganism, min. |
| S.aureus | 1.0 | 30 |
| | 2.0 | 15 |
| | 3.0 | 10 |
| E.coli | 1.0 | >30 |
| | 2.0 | 20 |
| | 3.0 | 5 |
| P.aeruginosa | 1.0 | 30 |
| | 2.0 | 10 |
| C.albicans | 1.0 | 30 |
| | 2.0 | 20 |
| | 3.0 | 10 |
| T.gypseum | 1.0 | 30 |
| | 2.0 | 10 |
| Test-virus | 1.0 | 30 |
| | 2.0 | 10 |
| B.cereus | 1.0 | 60 |

### Example 19

While testing the claimed titanium coagulant in the SP SRI EM na PASTEUR, a virus containing liquid (rotaviruses) in a respective concentration was introduced into the water solution of the titanium coagulant, and upon expiration 20 min., 30 min., 60 min., 120 min. the rest infection activity of the tested object was determined. The test results are shown in the Table 20.

**Table 20**

| Rest infection activity of the human rotavirus after introduction of the new titanium coagulant | |
|---|---|
| Rotavirus concentration in the presence of the titanium coagulant | Rest infection activity |
| (initial rotavirus concentration is 1×10⁶) | |
| 1×10⁴ / 20 min | + |
| 1×10³ / 20 min | NE |
| 1×10² / 20 min | NE |
| 1×10 / 20 min | NE |

As one can see from the results of testing the claimed titanium coagulant, after 30 min. of its action the rotavirus concentration reduces sharply, by an order of magnitude, and further, essentially after 30 min. exposing with the claimed new titanium coagulant, the infection activity of rotaviruses has been completely suppressed. As an illustration, Fig. 1 and Fig. 2 show electron microscope images obtained in accordance with testing virus containing samples, particularly, feces of child having the acute gastroenteritis (the scale length is 100 nm) prior (Fig. 1) and after (Fig. 2) the contact with the tested titanium coagulant. Fig. 2 shows clearly that under the influence of the titanium coagulant the rotavirus particles lost their outer protein coat.

### Example 20

Besides the above investigations, on the base of the SP SRI EM na PASTEUR, additional tests were performed at various concentration of the titanium coagulant necessary for suppressing the infection activity of the human rotavirus, hepatitis A virus, as well as for studying the influence on noravirus, to the benefit of the early application of recommendation on the real purification of potable water with the claimed titanium coagulant for the purpose of its utilization as an effective disinfectant and disinfecting means for state improvement and health maintenance.

For that end, the new titanium coagulant was introduced into a virus containing liquid in a respective concentration, and upon expiration 20 min. the rest infection activity of the tested material was determined. The results of such tests are shown in the Table 21.

**Table 21**

| Rest infection activity of human enteroviruses in the presence of the claimed titanium coagulant | | | |
|---|---|---|---|
| Enterovirus concentration (initial rotavirus concentration is 1×10⁸) | | | Rest infection activity |
| Hepatitis A virus | Rotaviruses | Noraviruses | |
| 1×10⁸ | 1×10⁸ | 1×10⁸ | + |
| 1×10⁶ | 1×10⁶ | 1×10⁶ | + |
| 1×10⁵ | 1×10⁵ | 1×10⁵ | + |
| 1×10⁴ | 1×10⁴ | 1×10⁴ | ± |
| 1×10² | 1×10² | 1×10² | NE |
| 1×10⁸ | 1×10⁸ | 1×10⁸ | NE |

Analysis of the obtained data shows the virucidal activity of the claimed coagulant in relation to the three most stable causative agents of diseases: hepatitis A virus, rotaviruses and noraviruses.

Besides evaluating the virucidal properties of pathogens, in the SP SRI EM na PASTEUR, an activity of the new titanium coagulant to the standard set of microbiological markers was determined. In this regard, the stage of evaluating the disinfecting activity was carried out at maximal dilutions of illustrative microorganisms; the test results showed positive effect of purifying ability of the claimed coagulant.

### Example 21

Testing the safe method for producing and utilizing the claimed titanium coagulant (absence of mutagenous impact; sensibilizing, allergenic, carcinogenic, gonadotoxic and other action) was carried out on the base of the State organ SRI of human ecology and environmental hygiene named after A.N. Sysin of the Russian Academy of Medical Sciences (RAMS).

On the ground of assumption that coagulants are typically a complex composition, the methods for determining coagulants in water are generally directed on revealing the leading component. Particularly, derivatives of aluminium oxychloride (AOC) and aluminium sulfate are monitored in accordance with the aluminium content in potable water. While testing the new coagulant, the same principles for evaluating the titanium coagulant safety as the safety evaluation of coagulants based on aluminium were applied. The tests (Table 22) have shown that introducing titanium into coagulant does not result in increasing the acute toxicity.

**Table 22**

| Hazard indices of the tested titanium coagulant and its ingredients | | | | |
|---|---|---|---|---|
| Index name | Agent name | | | |
| | Titanium coagulant | AOC | Titanium | Aluminium |
| LD₅₀, mg/kg | 5930 | 4320 | 150 | 180-1360 |
| L.conc. mg/L | 0.1 (muddiness) | 1.45 (muddiness) | 4.5 (taint) | 0.2 (muddiness) |
| L.conc. mg/L | 1.0 (retardation) | 1.0 (retardation) | 0.1 (retardation) | - |
| Min.possi bl, mg/kg | | 1.0 | 1.0 | - |
| MAC, mg/L | 0.1 | 1.5 | 0.1 | 0.2 |

One can see from the Table 22 that the method for producing the titanium coagulant and the coagulant generally are safe by the main hygienic indices, and control of the titanium coagulant content in purified water should be performed in accordance with the titanium and aluminium content therein pursuant to the MAC of 0.1 mg/L and 0.2 mg/L, respectively, established for them.

The State organ SRI of human ecology and environmental hygiene named after A.N. Sysin of the RAMS, on the basis of the performed tests, has decided to issue to the Applicant the "Sanitary-epidemiological statement" on compliance of the analyzed Applicant's titanium coagulant with the established sanitary-epidemiological requirements [for a term of 5 (five) years provided that the rest total amount of all aluminium forms in the treated potable water must not exceed 0.2 mg/L and 0.1 mg/L for titanium (10-11)].

In accordance with the test results of many organizations [the State organ SRI of human ecology and environmental hygiene named after A.N. Sysin (RAMS); the Moscow State unitary enterprise "MOSVODOKANAL"; the St. Petersburg SRI EM na PASTEUR; the St. Petersburg Center of innovation technologies and environmental monitoring; the Central bacteriology laboratory of the municipal unitary enterprise "GORVODOKANAL" (MUP "GORVODOKANAL"), Novosibirsk; the Department of manufacturing inspection and development of the unitary enterprise "Vodokanal of St. Petersburg"; the Applicant's pilot base, the Yaregskaya oil-titanium company; the base laboratory of the branch of the municipal unitary enterprise "Tomskiy energokompleks" "TOMSKVODOKANAL"; the Central laboratory of the municipal unitary enterprise "VODOKANAL", Ekaterinbourg; the research water quality laboratory of the municipal unitary enterprise "Syktyvkarskiy Vodokanal", Syktyvkar; and many others], the conclusions have been drawn on the necessity of wide utilization of the new biocide titanium coagulant developed by the Applicant for the wide use of this coagulant in potable water purification systems in order for obtaining high-quality water which can be obtained by the claimed coagulant. Also, the conclusion has been drawn on expediency of applying the claimed titanium coagulant in various forms [(powder, tablets, granulae) and respective concentrations (depending on the contamination level of purified water)] including for its wide and available use in extreme (alpinists, geologists, tourists, etc.) and field conditions, emergency conditions, cataclysms, etc.

The results of the shown tests confirm the industrial applicability of the claimed group of inventions which utilization will permit to provide a human being with high-quality potable water obtained by the simple and safe method both in everyday life and in extreme conditions, as well as will promote to protect environment from contamination with harmful substances and to provide the safe human activity.

In the Applicant's opinion, the claimed invention should be referred to the high-priority development line "Nation health".

### References:

1. Natural and waste water purification handbook. Πaaπb , Kapy 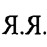 , MeH 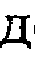 ep X.A., M.: High school., 1994. P.51-58.
2. RU 2126365 C1.
3. RU 2228304 C1.
4. RU 2019520 C1.
5. RU 2195434 C1 (prior art for the independent claim 1).
6. Coagulants and flocculants in water purification processes]. Chemistry, 1987, P. 48 - 79.
7. RU 2102322 C1.
8. Construction codes and regulations, (CCR)] 2.04.02-84. Water-supply. Outer piping and buildings. M., 1985. P.23.
9. CCR-2.04.03-85.Canalization. Outer piping and buildings. 1986. P.48.
10. Sanitary codes and regulations. Potable water. Hygienic requirements to water quality in centralized systems of potable water-supply» 2.1.4.1074-01
11. Maximum admissible concentrations (MAC) of chemical substances in water of water objects of household and cultural-domestic water use- 2.1.5.1315-03

1. A titanium coagulant for natural and waste water purification and disinfection, which coagulant comprising compositions of oxides, hydroxides, sulfates, oxy hydrosulfates, and oxy hydrochlorides of titanium, silicon and aluminium, ***characterized*** in that the titanium coagulant comprising additionally compositions of silicon, sulfur, ferrous, calcium, chlorine, and wherein the ingredients being taken in ratio:
   water no more than 7.4 weight %,
   aluminium oxide no more than 76.5 weight %,
   titanium oxide no less than 10.6 weight %,
   silicon oxide no less than 5.0 weight %,
   and sulfur, ferrous, calcium, chlorine accounting for no more than 0.5 weight %.
2. A safe method for producing the titanium coagulant for natural and waste water purification and disinfection, which method including steps of: providing a flotation concentrate from ore by any known enrichment method or combination thereof; torrefying subsequently the coagulant; and preparing a mixture therefrom, ***characterized*** in that: the step of torrefying is carried out until obtaining a roasted flotation concentrate with titanium dioxide no less than 50 % and silicon dioxide no less than 25 %; the mixture is prepared on the basis of the flotation concentrate, charred coal and lignosulfonates, which mixture being briquetted and chloridized at a temperature of no less than 600 °C and cleaned subsequently, after which the obtained mixture of liquid chlorides being subjected to synthesis; drying the obtained paste-like titanium coagulant at a temperature of no more than 135 °C, thus obtaining the powdered titanium coagulant, after which this titanium coagulant being obtained in pelletized and/or granulated form.
3. A method for utilizing the titanium coagulant for natural and waste water purification and disinfection in accordance with the first embodiment, which method including a step of adding to water being purified the titanium coagulant in the form of water suspension, ***characterized*** in that the titanium coagulant obtained according to claim 1 is added to water being purified in the form of water suspension of 10 to 50 % solution in amount of no less than 5 mg/L on powdered titanium coagulant basis, and an intense mixing is performed no less than 1 minute.
4. The method according to claim 3, ***characterized*** in that a mixture of powdered aluminium sulfate, and/or aluminium oxychloride, and/or aluminium hydroxychloride being mixed in advance with the titanium coagulant at a ratio of 50 % : 50 % is added in addition to water being purified.
5. The method according to claim 3, ***characterized*** in that a water solution of flocculants at a ratio of no more than 0.5 % in relation to the titanium coagulant is added in addition to water being purified.
6. The method according to claim 3, ***characterized*** in that superflac, or praestol, or polyacrylamide, or water-soluble cationic polymer, or polyelectrolyte, or magnafloc or polydiallyldi-methylammonium chloride.
7. The method according to claim 3, ***characterized*** in that mixtures of powdered aluminium sulfate, and/or aluminium oxychloride, and/or aluminium hydroxychloride being prepared in advance with the obtained titanium coagulant at a ratio of 50 % : 50 % is added in addition to water being purified, after which a water solution of flocculants at a ratio of no more than 0.5 % in relation to the mixture of titanium coagulant with powdered aluminium sulfate and/or aluminium oxychloride and/or aluminium hydroxychloride is added in addition to water being purified.
8. A method for utilizing the titanium coagulant for natural and waste water purification and disinfection in accordance with the second embodiment, which method including a step of adding to water being purified the titanium coagulant in the form of water suspension, ***characterized*** in that the titanium coagulant obtained according to claim 1, is added to water being purified in the form of water suspension of 10 to 50 % solution in amount of no less than 5 mg/L on basis of mixture of powdered non-dechlorinated titanium dioxide used as an opacifier and disinfectant with the titanium coagulant in amount of no more 10 % in relation to the obtained titanium coagulant, and an intense mixing is performed no less than 1 minute.
9. The method according to claim 8, ***characterized*** in that a mixture of powdered aluminium sulfate, and/or aluminium oxychloride, and/or aluminium hydroxychloride being mixed in advance with the titanium coagulant and titanium dioxide at a ratio of 45 % : 55 % is added in addition to water being purified.
10. The method according to claim 8, ***characterized*** in that a water solution of flocculants at a ratio of no more than 0.5 % in relation to the mixture of the titanium coagulant and non-dechlorinated titanium dioxide is added in addition to water being purified.
11. The method according to claim 10, ***characterized*** in that superflac, or praestol, or polyacrylamide, or water-soluble cationic polymer, or polyelectrolyte, or magnafloc is used as flocculants.
12. The method according to claim 3, ***characterized*** in that mixtures of powdered aluminium sulfate, and/or aluminium oxychloride, and/or aluminium hydroxychloride being mixed in advance with a mixture of the titanium coagulant obtained according to claim 1 with non-dechlorinated titanium dioxide at a ratio 45 % : 55 % are added in addition to water being purified, after which a water solution of flocculants at a ratio of no more than 0.5 % in relation to the mixture of titanium coagulant with powdered aluminium sulfate and/or aluminium oxychloride and/or aluminium hydroxychloride is added in addition to water being purified.
13. The method according to claim 8, ***characterized*** in that the titanium coagulant obtained according to claim 1 is added in addition to water being purified, which titanium coagulant is used in combination with the non-dechlorinated titanium dioxide not subjected to the stage of surface treatment and acting as the water opacifier.
14. The method according to claim 8, ***characterized*** in that the titanium coagulant obtained according to claim 1 is used in combination with the known coagulants, flocculants and titanium dioxide.

## Claims

1. A composition comprising:
a titanium coagulant for natural and waste water purification and disinfection,
which titanium coagulant comprises compositions of oxides, hydroxides, sulfates,
oxy hydrosulfates, and oxy hydrochlorides of titanium, silicon and aluminium,
wherein the titanium coagulant comprises additionally compositions of silicon, sulfur, ferrous, calcium, chlorine, and wherein the ingredients being taken in a ratio of:
| | |
|---|---|
| water | no more than 7.4 weight %, |
| aluminium oxide | no more than 76.5 weight %, |
| titanium oxide | no less than 10.6 weight %, |
| silicon oxide | no less than 5.0 weight %, |
sulfur, ferrous, calcium, chlorine accounting for no more than 0.5 weight %;
and
a mixture of aluminium sulfate and/or aluminium oxychloride and/or aluminium hydroxychloride,
**characterized in that** the weight percentage ratio of titanium coagulant to the mixture is 50:50.

2. A composition according to claim 1, **wherein** the titanium coagulant is in admixture with titanium dioxide.

3. A composition according to claim 2, **wherein** the weight percentage ratio of titanium dioxide and titanium coagulant to the mixture is 55:45.

4. A composition according to claim 2 or 3, **wherein** the weight percentage ratio of titanium dioxide : titanium coagulant: the mixture is 5:50:45.

5. A composition according to any previous claim, **wherein** the mixture consists of aluminium sulfate.

6. A composition according to claim any previous claim, **wherein** it is a water suspension.

7. A composition according to claim 6, **wherein** said water suspension is 10 to 50 weight %.

8. A composition according to claim 7, **wherein** said water suspension is 30 weight %.

9. A composition according to any previous claim, further comprising a water solution of flocculants at a ratio of no more than 0.5% in relation to the titanium coagulant.

10. A composition according to any previous claim, further comprising a water solution of flocculants at a ratio of 0.5% in relation to the titanium coagulant.

11. A composition according to claim 9 or 10, wherein the flocculant is superflac, praestol, polyacrylamide, water-soluble cationic polymer, polyelectrolyte, magnafloc or polydiallyldi-methylammonium chloride.

12. Use of a composition according to any previous claim for purification and disinfection of natural and waste water.
